# FASCICULE DE BREVET EUROPEEN

(11) **EP 1 636 520 B1**
(45) Date de publication et mention de la délivrance du brevet: **11.11.2009**
(21) Numéro de dépôt: 04767278.7
(22) Date de dépôt: 07.06.2004
(51) Int. Cl.: F16L 11/08, F16L 11/12, F16L 55/04

(54) **CONDUITE TUBULAIRE FLEXIBLE POUR LE TRANSPORT DE FLUIDE ET NOTAMMENT POUR HYDROCARBURES GAZEUX, A CARCASSE ET GAINE INTERNE ANTI-TURBULENCE**
FLEXIBLE ROHRFÖRMIGE LEITUNG FÜR DEN TRANSPORT VON FLUIDEN UND BESONDERS GASFÖRMIGEN KOHLENWASSERSTOFFEN MIT WIRBELSTRÖMUNGSVERHINDERNDER KARKASSE UND INNERER AUSKLEIDUNG
FLEXIBLE TUBULAR DUCT FOR THE TRANSPORT OF FLUID AND PARTICULARLY GASEOUS HYDROCARBONS WITH AN ANTI-TURBULENCE CARCASS AND INTERNAL LINING

(30) Priorité: 11.06.2003 FR 0306995
(43) Date de publication de la demande: 22.03.2006
(73) Titulaire: Technip France, 92400 Courbevoie (FR)
(72) Inventeur: DUPOIRON, François, F-76360 Barentin (FR)
(74) Mandataire: Bertrand, Didier
(86) Numéro de dépôt international: PCT/FR2004/001412
(87) Numéro de publication internationale: WO 2004/111514

(56) Documents cités:
- EP-A- 0 429 357
- FR-A- 2 543 342
- FR-A- 2 663 401
- US-A- 3 165 123
- US-A- 3 908 788
- US-B1- 6 371 414
- DATABASE WPI Section Ch, Week 200035 Derwent Publications Ltd., London, GB; Class H01, AN 2000-409127 XP002266035 & RU 2 133 905 C (ALEKSANDROV RES TECHN INST) 27 juillet 1999 (1999-07-27)

## Description

La présente invention concerne une conduite tubulaire flexible de type non lié pour le transport de fluide utilisée dans le domaine de l'exploitation pétrolière en mer. Elle concerne plus particulièrement un perfectionnement des conduites de type "rough bore" (à passage non-lisse) destinées à la production ou au transport d'hydrocarbures notamment gazeux.

Les conduites flexibles les plus utilisées dans une exploitation pétrolière sont en général du type non liées ("unbonded" en anglais) dans lesquelles les différentes couches successives et distinctes présentent une certaine liberté de se déplacer l'une par rapport à l'autre, et elles comprennent de l'intérieur vers l'extérieur, une carcasse constituée par exemple d'un feuillard agrafé qui sert à empêcher l'écrasement de la conduite sous pression externe, une gaine d'étanchéité interne en polymère, une voûte de pression constituée par au moins un fil de forme agrafé et enroulé selon une spirale à faible pas, des armures dites de traction d ont l'angle d'armage, mesuré sur l'axe longitudinal de la conduite est inférieur à 55° et une gaine externe d'étanchéité en polymère. Une telle conduite flexible est désignée comme étant un flexible dont l'élément le plus intérieur est constitué par une carcasse qui forme un passage non lisse ("rough bore" en anglais) en raison des déjoints entre les spires de la carcasse.

Lorsqu'une conduite flexible comprend de l'intérieur vers l'extérieur, une gaine d'étanchéité polymérique interne, une voûte de pression constituée par des fils de forme enroulés à pas court et destinée à supporter les contraintes radiales provoquées par la circulation des effluents dans la conduite flexible, une gaine anti-collapse, une ou plusieurs armures de traction et de pression enroulées autour de la gaine anti-collapse et une gaine d'étanchéité externe en polymère ; elle est appelée "smooth-bore" parce que l'élément le plus intérieur est une gaine étanche à paroi lisse.

Dans une variante, la conduite flexible ne comprend pas de voûte de pression et les nappes d'armures sont spiralées à pas inverse avec des angles d'armage voisins de 55°. Dans ce cas, les pressions interne et externe ainsi que les efforts de traction s'exercent ou sont retenus par ces nappes d'armures ; une telle conduite flexible est dite équilibrée.

Les conduites dites "smooth bore" (à passage lisse) sont utilisées pour véhiculer les fluides n'ayant pas de phase gazeuse (et donc, principalement pour les conduites d'injection d'eau) ; en effet, pour les fluides biphasiques, la diffusion, au cours de l'écoulement, des gaz au travers de la gaine polymérique d'étanchéité interne provoque une augmentation de la pression régnant dans l'annulaire situé autour de la gaine interne. Lorsque la pression dans l'annulaire devient supérieure à la pression interne régnant dans la conduite comme par exemple lors d'une décompression, à la suite d'un arrêt de production (en anglais "shut-down"), la différence de pression peut conduire à l'effondrement de la gaine d'étanchéité polymérique interne sur elle-même ("collapse"). C'est entre autres pour conjurer ce risque qu'on préfère disposer dans ce cas une carcasse anti-effondrement dans la gaine polymérique interne et donc utiliser une conduite "rough bore" (à passage non-lisse).

La carcasse est, comme le rappelle la norme API 17J de l'American Petroleum Institute, une couche tubulaire, en principe interne, formée d'un enroulement métallique agrafé et destinée essentiellement à empêcher l'écrasement ou l'effondrement ("collapse") de la gaine d'étanchéité interne ou de la conduite en l'absence de pression interne dans la conduite sous l'effet de la pression externe.

La carcasse est réalisée le plus traditionnellement en feuillard résistant à la corrosion, profilé généralement selon une forme en section voisine d'un S couché et enroulé de manière à réaliser des spires agrafées les unes aux autres. Afin d'améliorer les performances d'une carcasse, diverses propositions ont déjà été faites. On pourra se reporter ainsi au document EP 0 429 357 de la Demanderesse, montrant une carcasse dont le feuillard constitutif comprend une onde formant une structure d'appui qui augmente la hauteur de la section et donc l'inertie, améliorant la résistance à l'écrasement de la carcasse.

Il existe aussi dans l'art antérieur des carcasses réalisées en fil de forme spiralé.

La Demanderesse a également proposé, dans la demande FR 01 13 748 une conduite à carcasse mixte constituée par un enroulement d'au moins un élément allongé métallique tel qu'un fil et agrafé par un feuillard.

Dans tous les cas considérés et auxquels l'invention est destinée, la carcasse comprend donc au moins en partie un feuillard ou un fil de forme spiralé.

Un problème est apparu sur les conduites flexibles de production et d'export d'hydrocarbures gazeux. Ce problème est lié à l'écoulement du gaz dans la conduite "rough bore" et plus précisément aux phénomènes de formation de tourbillons qui apparaissent au contact des déjoints entre les spires de la carcasse. En effet, la discontinuité de surface rencontrée au niveau de ces déjoints entraîne la formation de tourbillons (en anglais "vortex shedding") qui perturbent l'écoulement du gaz dans la conduite. Ces tourbillons induisent des variations de pression cycliques qui peuvent conduire à des problèmes de résonance (vibrations, bruits) dans la conduite et au niveau des équipements et tuyauteries situés sur la plate-forme (ou le FPSO "Floating producing storage and offloading") et généralement appelés "topsides", et également dans les équipements immergés. Ces fluctuations de pression et surtout ces vibrations résultantes peuvent devenir très importantes et conduire à des problèmes de fatigue, notamment dans lesdits équipements et aux extrémités des conduites qui subissent alors des sollicitations plus importantes que celles pour lesquelles elles ont été conçues. Ces problèmes peuvent engendrer de nombreux désagréments comme par exemple des fuites au niveau des équipements et tuyauteries connectés à la conduite, dues à la fatigue.

Une solution à ces problèmes consisterait à modifier des réglages au niveau des équipements de la plate-forme ou du puits, modifiant ainsi les conditions d'utilisation des conduites pour éviter ces phénomènes de résonance (réduction de la pression, du débit, etc.). Toutefois, si ces modifications des conditions d'utilisation de la conduite permettent de réduire les effets de ces tourbillons en diminuant les problèmes de résonance, elles ne permettent pas d'optimiser l'utilisation de la conduite ni de résoudre réellement le problème posé par ces tourbillons.

On constate de plus un problème de perte de charge des écoulements de liquide ou de gaz dans les conduites "rough bore" (à passage non-lisse) en raison des turbulences créées au niveau des déjoints.

Le but de l'invention est de trouver une solution à ces problèmes de tourbillons et de proposer une conduite de type structurel "rough bore" permettant des écoulements gazeux ne présentant plus ces turbulences néfastes ni les phénomènes de résonance associés.

Ce but est atteint selon l'invention grâce à une conduite tubulaire flexible d'exploitation pétrolière pour le transport de fluides gazeux, notamment d'hydrocarbures gazeux, la conduite étant du type non lié comportant au moins une carcasse, une gaine polymérique d'étanchéité interne assurant l'étanchéité pour le fluide transporté et une ou plusieurs nappes d'armure et dont la carcasse, située à l'intérieur de la gaine d'étanchéité interne, est constituée par l'enroulement en spires agrafées d'un élément profilé, **caractérisée en ce que** les spires de la carcasse sont recouvertes intérieurement d'une gaine percée de trous, destinée à s'opposer au turbulences du fluide circulant dans la conduite. La gaine permet de masquer les déjoints et donc de s'opposer aux turbulences et à leurs effets, tant au niveau des pertes de charge qu'au niveau des vibrations induites. Les trous de la gaine permettent d'éviter les problèmes précités d'effondrement de la gaine anti-turbulence (comme par exemple en cas d'arrêt de production). D'ailleurs, à cet effet, les trous de la gaine percée sont situés en partie (de préférence au moins 30 % d'eux) au niveau des déjoints intérieurs entre les spires.

Il est avantageux que la gaine percée s'enfonce partiellement au niveau des déjoints intérieurs entre les spires, afin de favoriser un accrochage mécanique longitudinal de la gaine anti-turbulence dans la carcasse, ce qui est opportun notamment pour l'utilisation de la conduite en colonne montante ("riser" en anglais). Un tel enfoncement partiel peut s'obtenir lors de la fabrication, par exemple si la gaine anti-turbulence est obtenue sous forme de gaine expansible disposée à l'intérieur de la carcasse et amenée au diamètre interne de la carcasse selon des techniques de chemisage connues.

Avantageusement, les trous de la gaine percée, très nombreux, sont oblongs. Leur diamètre moyen (rapporté statistiquement à des trous circulaires) est compris entre 1 et 8 mm, par exemple 5 mm. Ils sont disposés longitudinalement de manière décalée, par exemple en spirale. De préférence, les trous sont disposés avec un pas compris entre 5 et 100 mm, par exemple tous les 20 mm.

D'autres avantages et caractéristiques seront mis en évidence à la lecture de la description qui suit, en référence aux dessins schématiques annexés sur lesquels :
La figure 1 est une vue en perspective d'une conduite de type "rough bore", à laquelle est appliquée l'invention,
La figure 2 est une vue schématique agrandie d'une section longitudinale de carcasse de l'art antérieur, réalisée par enroulement de feuillard en S,
La figure 3 est une vue schématique agrandie d'une section longitudinale de carcasse, selon un mode de réalisation de l'invention.

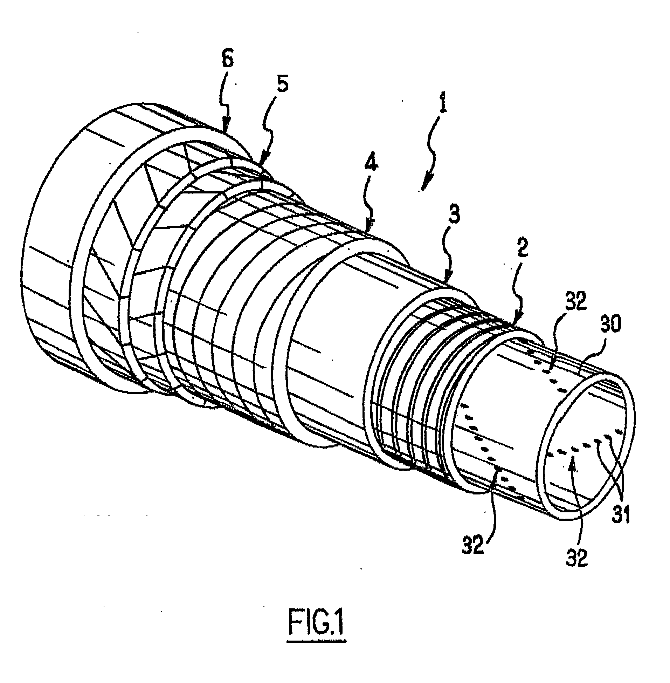

La conduite flexible 1 représentée figure 1 comprend de l'intérieur vers l'extérieur :
- une carcasse 2 constituée d'un enroulement métallique agrafé qui sert à empêcher l'écrasement de la conduite sous la pression externe,
- une gaine étanche de pression interne 3, réalisée en matière plastique généralement polymère, résistant à l'action chimique du fluide à transporter,
- une voûte de pression 4 résistant principalement à la pression développée par le fluide dans la gaine de pression et constituée par l'enroulement e n hélice à pas court (c'est-à-dire avec un angle d'enroulement voisin de 90°) autour de la gaine interne, d'un ou plusieurs fils métalliques de forme agrafés (auto-agrafables ou non) ; les fils de forme ont une section en Z ou en T ou leurs dérivés (teta ou zeta), en U, ou en I,
- au moins une nappe 5 (et généralement au moins deux nappes croisées) d'armures de traction enroulées à pas long ; l'angle d'armage mesuré sur l'axe longitudinal de la conduite est par exemple sensiblement égal à 55°, et
- une gaine 6 de protection et d'étanchéité externe en polymère.

La voûte de pression, destinée essentiellement à résister à la pression interne n'est pas nécessaire dans toutes les situations et, compte tenu du surcoût qu'elle engendre, on préfère utiliser une conduite sans voûte de pression chaque fois que les circonstances le permettent. L'invention s'applique à un cas comme à l'autre.

Elle comprend de plus la gaine anti-turbulence 30 qui sera mieux décrite plus loin.

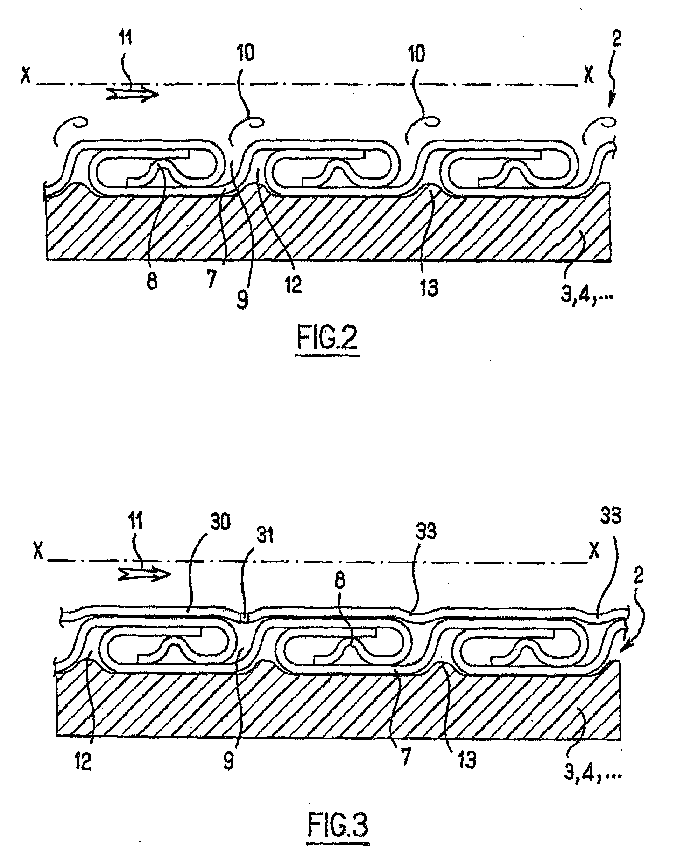

La figure 2 montre la constitution d'une carcasse 2 connue par le document EP 0 429 357, faite de l'enroulement hélicoïdal autour d'un axe XX d'un feuillard 7 formé en S aplati, muni d'une onde d'appui 8. Les déjoints intérieurs 9 apparaissant entre les spires adjacentes forment un puits fermé et sont la cause de tourbillons symbolisés par les lignes 10 au niveau de l'écoulement de fluide gazeux dans la conduite, dont le flux général est symbolisé par 1a flèche 11. Les déjoints extérieurs 12 sont obturés par la couche plastique de la gaine 3 qui entoure la carcasse et flue légèrement dans les déj oints 11 en formant des indentations 13.

Selon l'invention, illustrée sur les figures 1 et 3, la carcasse 2 est recouverte intérieurement d'une gaine anti-turbulence 30 disposée avantageusement de manière à former de légères dépressions 33 au niveau des déjoints intérieurs 9. La gaine 30 est dotée de nombreux trous 31, par exemple trois trous 31 d'environ 5 mm de diamètre tous les 10 mm et décalés de 120 °, la série suivante étant décalée de 10 ° pour éviter de cumuler les perturbations aérodynamiques., de sorte qu'il se forme trois spirales 32 de trous 31 dont au moins une partie substantielle (de préférence au moins 30 %)va se trouver au-dessus des déjoints 9 de façon à empêcher l'effondrement de la gaine antiturbulence lors d'une décompression à l'intérieur de la conduite.

Bien entendu, ces exemples numériques, de même que la forme, le nombre et les dimensions des trous sont susceptibles de varier en fonction de chaque application et ne sont nullement limitatifs. En effet, l'épaisseur de la gaine, la pression et la nature du fluide transporté sont par exemple autant de facteurs qui sont susceptibles de modifier l'agencement des trous dans la gaine antiturbulence.

Naturellement, la gaine anti-turbulence 30 de l'invention, outre qu'elle atténue les vibrations induites, est également efficace pour réduire les pertes de charge d'écoulement en supprimant les turbulences au niveau des déjoints : cette réduction de perte de charge compense largement la perte induite par la réduction de diamètre de passage qu'entraîne la présence de la gaine 30 à l'intérieur de la carcasse 2.

La gaine 30 est polymérique et peut être armée de fibre ou d'un treillis de manière à augmenter sa résistance à l'effondrement. L'augmentation de cette résistance à l'effondrement peut notamment permettre la réduction du nombre de trous en augmentant le pas qui pourrait alors passer de 100 mm à plusieurs mètres.

On peut également noter qu'il pourrait être intéressant d'utiliser une gaine antiturbulence comportant plusieurs rainures externes reliant plusieurs trous entre eux. Ceci favoriserait ainsi le retour des gaz vers l'intérieur de la gaine antiturbulence en cas de décompression.

## Revendications

1. Conduite tubulaire flexible d'exploitation pétrolière pour le transport de fluides gazeux et notamment d'hydrocarbures gazeux, la conduite étant du type non lié comportant au moins une carcasse (2), une gaine polymérique d'étanchéité interne (3) assurant l'étanchéité pour le fluide transporté et une ou plusieurs nappes d'armure (5) et dont la carcasse (2), située à l'intérieur de la gaine d'étanchéité interne (3), est constituée par l'enroulement en spires agrafées d'un élément profilé (7), **caractérisée en ce que** les spires de la carcasse (2) sont recouvertes intérieurement d'une gaine (30) percée de trous (31), destinée à s'opposer aux turbulences du fluide circulant dans la conduite.

2. Conduite selon la revendication 1, dont les spires de la carcasse (2) forment entre elles des déjoints intérieurs (9), **caractérisée en ce que** les trous (31) de la gaine percée (30) sont situés en partie au niveau des déjoints intérieurs (9) entre les spires et empêchent l'effondrement de la gaine antiturbulence (30) lors d'une décompression à l'intérieur de la conduite.

3. Conduite selon la revendication 2, **caractérisée en ce qu'**au moins 30 % des trous sont situés en partie au niveau des déjoints intérieurs (9) entre les spires.

4. Conduite selon l'une quelconque des revendications 2 ou 3, **caractérisée en ce que** la gaine percée s'enfonce partiellement au niveau des déjoints intérieurs (9) entre les spires.

5. Conduite selon l'une quelconque des revendications 1 à 4, **caractérisée en ce que** les trous sont oblongs.

6. Conduite selon l'une quelconque des revendications 1 à 5, **caractérisée en ce que** les trous (31) ont un diamètre moyen compris entre 1 et 8 mm.

7. Conduite selon l'une quelconque des revendications 1 à 6, **caractérisée en ce que** les trous (31) sont disposés longitudinalement de manière décalée.

8. Conduite selon l'une quelconque des revendications 1 à 7, **caractérisée en ce que** les trous (31) sont disposés avec un pas compris entre 5 et 100 mm.

9. Conduite selon l'une quelconque des revendications 1 à 8, **caractérisée en ce que** la gaine polymérique antiturbulence (30) est armée de fibre ou d'un treillis.

## Claims

1. A flexible tubular pipe for oil exploitation for transporting gaseous fluids, particularly gaseous hydrocarbons, the pipe being of the unbonded type and comprising at least a carcass (2), a polymer internal sealing sheath (3) providing sealing for the transported fluid and one or more armor layers (5) and in which the carcass (2), situated inside the internal sealing sheath (3) consists of the interlocked spiral winding of a profiled element (7)**, characterized in that** the turns of the carcass (2) are internally covered with a sheath (30) pierced with holes (31) that is intended to oppose turbulence of the fluid flowing in the pipe.

2. The pipe as claimed in claim 1, in which the turns of the carcass (2) form internal discontinuities (9) between them, **characterized in that** the holes (31) in the pierced sheath (30) are situated partially at the internal discontinuities (9) between the turns and prevent the antiturbulence sheath (30) from collapsing if the interior of the pipe is decompressed.

3. The pipe as claimed in claim 2, **characterized in that** at least 30% of the holes are partially situated at the internal discontinuities (9) between the turns.

4. The pipe as claimed in either one of claims 2 and 3, **characterized in that** the pierced sheath partially collapses at the internal discontinuities (9) between the turns.

5. The pipe as claimed in any one of claims 1 to 4, **characterized in that** the holes are oblong.

6. The pipe as claimed in any one of claims 1 to 5, **characterized in that** the holes (31) have a mean diameter of between 1 and 8 mm.

7. The pipe as claimed in any one of claims 1 to 6, **characterized in that** the holes (31) are positioned longitudinally in an offset manner.

8. The pipe as claimed in any one of claims 1 to 7, **characterized in that** the holes (31) are positioned with a spacing of between 5 and 100 mm.

9. The pipe as claimed in any one of claims 1 to 8, **characterized in that** the antiturbulence polymer sheath (30) is reinforced with fiber or with a latticework.

## Patentansprüche

1. Flexible rohrförmige Leitung zur Erdölgewinnung für den Transport von gasförmigen Fluiden und insbesondere gasförmigen Kohlenwasserstoffen, wobei die Leitung in ungebundener Ausführung ausgebildet ist und zumindest eine Karkasse (2), einen internen Polymerdichtmantel (3), welcher die Dichtigkeit für das transportiere Fluid gewährleistet, und eine oder mehrere Armierungslagen (5) aufweist, und wovon die Karkasse (2), welche an der Innenseite des internen Dichtmantels (3) angeordnet ist, durch die Wicklung eines profilierten Bauteils (7) in zusammengehakten Windungen besteht, **dadurch gekennzeichnet, dass** die Windungen der Karkasse (2) innen von einer mit Löchern (31) gelochten Hülle (30) bedeckt sind, welche dazu bestimmt ist, den Wirbelströmungen des in der Leitung strömenden Fluids entgegenzuwirken.

2. Leitung nach Anspruch 1, deren Wicklungen der Karkasse (2) zwischen sich innere Zwischenräume (9) bilden, **dadurch gekennzeichnet, dass** die Löcher (31) der gelochten Hülle (30) zum Teil auf Höhe der inneren Zwischenräume (9) zwischen den Wicklungen angeordnet sind und das Zusammenfallen der Antiwirbelströmungshülle (30) bei einer Dekompression im Inneren der Leitung verhindern.

3. Leitung nach Anspruch 2, **dadurch gekennzeichnet, dass** zumindest 30 % der Löcher teilweise auf Höhe der inneren Zwischenräumen (9) zwischen den Wicklungen angeordnet sind.

4. Leitung nach Anspruch 2 oder 3, **dadurch gekennzeichnet, dass** sich die gelochte Hülle auf Höhe der inneren Zwischenräumen (9) zwischen den Wicklungen zum Teil eindrückt.

5. Leitung nach einem der Ansprüche 1 bis 4, **dadurch gekennzeichnet, dass** die Löcher länglich ausgebildet sind.

6. Leitung nach einem der Ansprüche 1 bis 5, **dadurch gekennzeichnet, dass** die Löcher (31) einen mittleren Durchmesser zwischen 1 und 8 mm aufweisen.

7. Leitung nach einem der Ansprüche 1 bis 6, **dadurch gekennzeichnet, dass** die Löcher (31) in Längsrichtung in versetzter Weise angeordnet sind.

8. Leitung nach einem der Ansprüche 1 bis 7, **dadurch gekennzeichnet, dass** die Löcher (31) in einem Abstand angeordnet sind, welcher zwischen 5 und 100 mm liegt.

9. Leitung nach einem der Ansprüche 1 bis 8, **dadurch gekennzeichnet, dass** die Antiwirbelströmungshülle (30) aus Polymer faserverstärkt oder mit einem Geflecht verstärkt ist.
